# EUROPEAN PATENT SPECIFICATION

(11) **EP 2 848 054 B1**
(45) Date of publication and mention of the grant of the patent: **04.05.2016**
(21) Application number: 13727495.7
(22) Date of filing: 24.05.2013
(51) Int. Cl.: H04W 56/00

(54) **METHODS AND DEVICES FOR OPTIMIZING CELL RE-ACQUISITIONS**
VERFAHREN UND VORRICHTUNGEN FÜR OPTIMIERTE ZELLNEUERFASSUNGEN
PROCÉDÉS ET DISPOSITIFS POUR OPTIMISER DES RÉ-ACQUISITIONS DE CELLULE

(30) Priority: 30.05.2012 US 201261653350 P; 19.10.2012 US 201213656489
(43) Date of publication of application: 18.03.2015
(73) Proprietor: Qualcomm Incorporated, San Diego, CA 92121-1714 (US)
(72) Inventor: SIKRI, Divaydeep, San Diego, California 92121-1714 (US); RASHID, Farrukh, San Diego, California 92121-1714 (US); MOHSENI, Jafar, San Diego, California 92121-1714 (US); FAN, Zhong, San Diego, California 92121-1714 (US)
(74) Representative: Catesby, Olivia Joanne
(86) International application number: PCT/US2013/042736
(87) International publication number: WO 2013/181112

(56) References cited:
- EP-A2- 0 788 255
- GB-A- 2 320 656
- US-A1- 2005 238 060
- US-A1- 2012 120 993

## Description

### CROSS REFERENCE TO RELATED APPLICATION & PRIORITY CLAIM

The present Application for Letters Patent claims priority to and the benefit of US Provisional Application No. 61/653,350 entitled "METHODS AND DEVICES FOR OPTIMIZING CELL RE-ACQUISITIONS" filed May 30, 2012, and assigned to the assignee hereof.

### TECHNICAL FIELD

Embodiments of the present invention relate generally to wireless communication, and more specifically, to methods and devices for facilitating re-acquisitions of a cell.

### BACKGROUND

Wireless communications systems are widely deployed to provide various types of communication content such as voice, video, packet data, messaging, broadcast, and so on. These systems may be accessed by various types of access terminals adapted to facilitate wireless communications, where multiple access terminals share the available system resources (e.g., time, frequency, and power). Examples of such wireless communications systems include code-division multiple access (CDMA) systems, time-division multiple access (TDMA) systems, frequency-division multiple access (FDMA) systems and orthogonal frequency-division multiple access (OFDMA) systems.

Access terminals adapted to access one or more wireless communications systems are becoming increasingly popular with consumers often using power-intensive applications that run on the access terminals. Access terminals are typically battery-powered and the amount of power a battery can provide between charges is generally limited. There remains a need to efficiently use power resources.

US patent application US 2005/238060 A1 describes a method of synchronizing to GSM RF downlink signal frame timing, which includes acquiring a continuous sample data record from a base RF channel (BCCH) of the RF downlink signal that encompasses multiple frames of the GSM RF downlink signal to guarantee inclusion of synchronization frames.

### BRIEF SUMMARY OF SOME EXAMPLES

Embodiments of the present invention address the issues discussed above as well as other. For example, in some instances, features which may assist in extending the operating life of access terminals between recharging the battery can be beneficial. Various features and aspects of the present disclosure are adapted to facilitate power conservation by optimizing re-acquisitions of a cell, including synchronizations with the cell. Summaries of sample embodiments are provided below for the reader's convenience. The summaries are not be used to limit the claimed technology.

According to at least one aspect of the present disclosure, access terminals may include a communications interface and a storage medium coupled with a processing circuit. The processing circuit can be adapted to obtain timing information for a Synchronization Channel (SCH) associated with a base station. The processing circuit may further be adapted to employ the obtained timing information for determining when to open a receive window for re-acquiring the base station.

Further aspects provide methods operational on an access terminals and/or access terminals including means to perform such methods. One or more examples of such methods may include obtaining timing information for a Synchronization Channel (SCH) associated with a base station. A determination whether the obtained timing is currently synchronized with the base station may be made. In response to a determination that the obtained timing is not currently synchronized with the base station, a receive window can be opened for re-acquiring the base station, wherein the receive window is opened at a time based on the obtained timing information.

Still further aspects include computer-readable mediums comprising programming operational on an access terminal. According to one or more examples, such programming may be adapted for obtaining timing information for a Synchronization Channel (SCH) associated with a base station, and for employing the obtained timing information to determine when to open a receive window for re-acquiring the base station.

Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments it should be understood that such exemplary embodiments can be implemented in various devices, systems, and methods.

### BRIEF DESCRIPTION OF THE DRAWINGS

FIG. 1 is a block diagram illustrating an example of a network environment in which one or more aspects of the present disclosure may find application.
FIG. 2 is a block diagram illustrating select components of the wireless communication system of FIG. 1 according to at least one example.
FIG. 3 is a block diagram illustrating one example of a 51-frame multiframe structure for GSM communications.
FIG. 4 is a block diagram illustrating another example of a 51-frame multiframe structure for GSM communications.
FIG. 5 is a block diagram illustrating FCCH frames and SCH frames in association with a receive window for a combined acquisition procedure according to at least one example.
FIG. 6 is a diagram illustrating timing for SCH reconfirmation procedures according to at least one example.
FIG. 7 is a block diagram illustrating select components of an access terminal according to at least one example.
FIG. 8 is a flow diagram illustrating an example for facilitating cell acquisition and re-acquisition according to at least one implementation.
FIG. 9 is a flow diagram illustrating a method operational on an access terminal according to at least one example.

### DETAILED DESCRIPTION

The description set forth below in connection with the appended drawings is intended as a description of various configurations and is not intended to represent the only configurations in which the concepts and features described herein may be practiced. The following description includes specific details for the purpose of providing a thorough understanding of various concepts. However, it will be apparent to those skilled in the art that these concepts may be practiced without these specific details. In some instances, well known circuits, structures, techniques and components are shown in block diagram form to avoid obscuring the described concepts and features.

The various concepts presented throughout this disclosure may be implemented across a broad variety of telecommunication systems, network architectures, and communication standards. Certain aspects of the discussions are described below for 3rd Generation Partnership Project (3GPP) protocols and systems, and related terminology may be found in much of the following description. However, those of ordinary skill in the art will recognize that one or more aspects of the present disclosure may be employed and included in one or more other wireless communication protocols and systems.

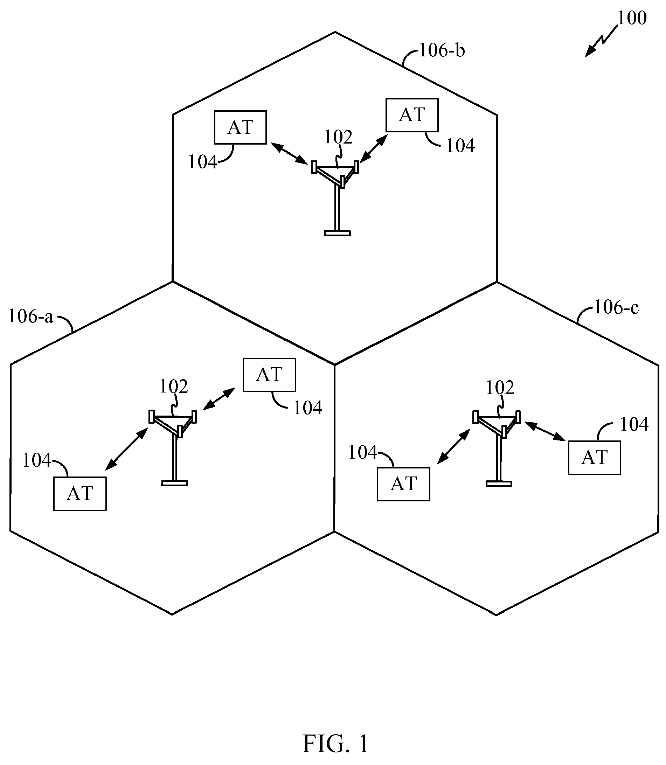

FIG. 1 is a block diagram of a network environment in which one or more aspects of the present disclosure may find application. The wireless communications system 100 includes base stations 102 adapted to communicate wirelessly with one or more access terminals 104. The system 100 may support operation on multiple carriers (waveform signals of different frequencies). Multi-carrier transmitters can transmit modulated signals simultaneously on the multiple carriers. Each modulated signal may be a CDMA signal, a TDMA signal, an OFDMA signal, a Single Carrier Frequency Division Multiple Access (SC-FDMA) signal, etc. Each modulated signal may be sent on a different carrier and may carry control information (e.g., pilot signals), overhead information, data, etc.

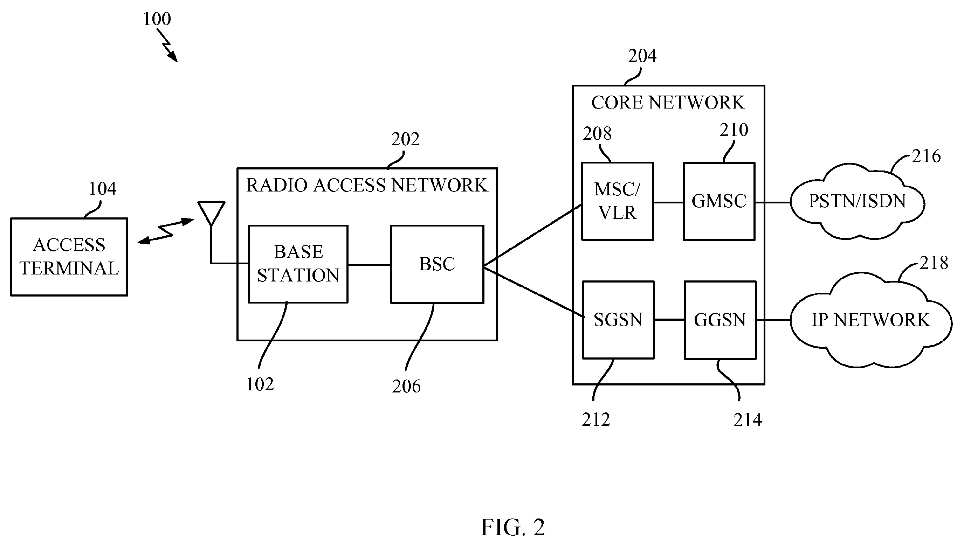

The base stations 102 can wirelessly communicate with the access terminals 104 via a base station antenna. The base stations 102 may each be implemented generally as a device adapted to facilitate wireless connectivity (for one or more access terminals 104) to the wireless communications system 100. The base stations 102 are configured to communicate with the access terminals 104 under the control of a base station controller (see FIG. 2) via multiple carriers. Each of the base station 102 sites can provide communication coverage for a respective geographic area. The coverage area 106 for each base station 102 here is identified as cells 106-a, 106-b, or 106-c. The coverage area 106 for a base station 102 may be divided into sectors (not shown, but making up only a portion of the coverage area). The system 100 may include base stations 102 of different types (e.g., macro, micro, femto, and/or pico base stations).

One or more access terminals 104 may be dispersed throughout the coverage areas 106. Each access terminal 104 may communicate with one or more base stations 102. An access terminal 104 may generally include one or more devices that communicate with one or more other devices through wireless signals. Such an access terminal 104 may also be referred to by those skilled in the art as a user equipment (UE), a mobile station (MS), a subscriber station, a mobile unit, a subscriber unit, a wireless unit, a remote unit, a mobile device, a wireless device, a wireless communications device, a remote device, a mobile subscriber station, a mobile terminal, a wireless terminal, a remote terminal, a handset, a terminal, a user agent, a mobile client, a client, or some other suitable terminology. An access terminal 104 may include a mobile terminal and/or an at least substantially fixed terminal. Examples of an access terminal 104 include a mobile phone, a pager, a wireless modem, a personal digital assistant, a personal information manager (PIM), a personal media player, a palmtop computer, a laptop computer, a tablet computer, a television, an appliance, an e-reader, a digital video recorder (DVR), a machine-to-machine (M2M) device, and/or other communication/computing device which communicates, at least partially, through a wireless or cellular network.

Turning to FIG. 2, a block diagram illustrating select components of the wireless communication system 100 is depicted according to at least one example. As illustrated, the base stations 102 are included as at least a part of a radio access network (RAN) 202. The radio access network (RAN) 202 is generally adapted to manage traffic and signaling between one or more access terminals 104 and one or more other network entities, such as network entities included in a core network 204. The radio access network 202 may, according to various implementations, be referred to by those skill in the art as a base station subsystem (BSS), an access network, a GSM Edge Radio Access Network (GERAN), etc.

In addition to one or more base stations 102, the radio access network 202 can include a base station controller (BSC) 206, which may also be referred to by those of skill in the art as a radio network controller (RNC). The base station controller 206 is generally responsible for the establishment, release, and maintenance of wireless connections within one or more coverage areas associated with the one or more base stations 102 which are connected to the base station controller 206. The base station controller 206 can be communicatively coupled to one or more nodes or entities of the core network 204.

The core network 204 is a portion of the wireless communications system 100 that provides various services to access terminals 104 that are connected via the radio access network 202. The core network 204 may include a circuit-switched (CS) domain and a packet-switched (PS) domain. Some examples of circuit-switched entities include a mobile switching center (MSC) and visitor location register (VLR), identified as MSC/VLR 208, as well as a Gateway MSC (GMSC) 210. Some examples of packet-switched elements include a Serving GPRS Support Node (SGSN) 212 and a Gateway GPRS Support Node (GGSN) 214. Other network entities may be included, such as a EIR, HLR, VLR and AuC, some or all of which may be shared by both the circuit-switched and packet-switched domains. An access terminal 104 can obtain access to a public switched telephone network (PSTN) 216 via the circuit-switched domain, and to an IP network 218 via the packet-switched domain.

As an access terminal 104 operates within the wireless communications system 100, the access terminal 104 may be connected with a serving cell, and may monitor one or more neighboring cells. To monitor a neighboring cell, the access terminal 104 typically employs a control channel carrier associated with the neighboring cell. The control channel can employ a 51-frame multiframe structure for sending information on the control channel.

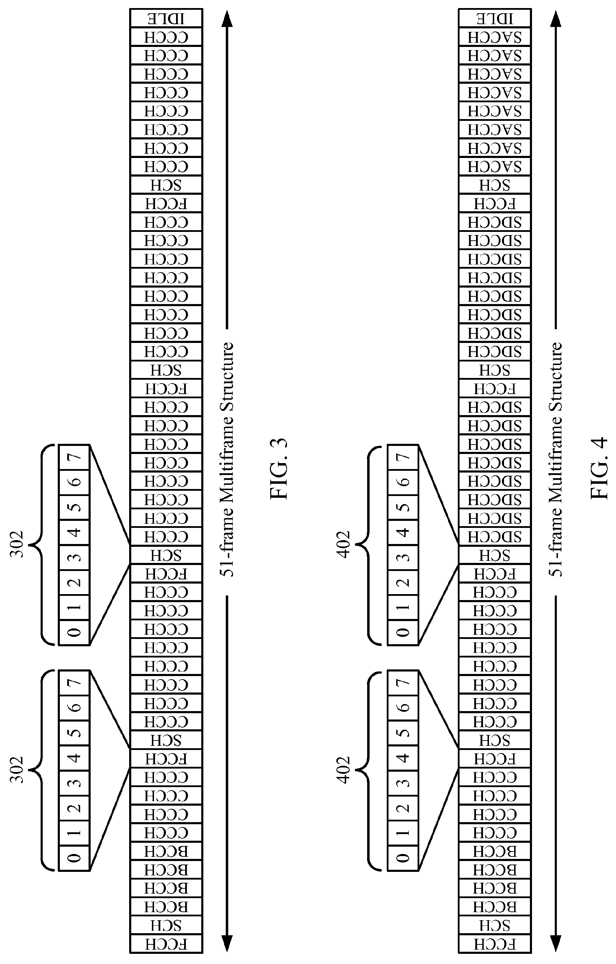

FIGS. 3-4 illustrate varying multiframe formats. FIG. 3 illustrates an example of a 51-frame multiframe structure with TDMA mapping for Frequency Correction Channel (FCCH), Synchronization Channel (SCH), Broadcast Control Channel (BCCH), and Common Control Channel (CCCH). FIG. 4 illustrates another example of a 51-frame multiframe structure with TDMA mapping for Frequency Correction Channel (FCCH), Synchronization Channel (SCH), Broadcast Control Channel (BCCH), Common Control Channel (CCCH), Stand-alone Dedicated Control Channel (SDCCH), and Slow Associated Control Channel (SACCH).

In both the examples of a 51-frame multiframe structure, the Frequency Correction Channels (FCCH) and Synchronization Channels (SCH) occur every 10 or 11 frames. Each of these frames includes eight (8) burst periods 302, 402 numbered 0 through 7. The Frequency Correction Channel (FCCH) is a downlink-only control channel in the GSM air interface. The neighboring cell typically transmits a radio burst during the first burst period (e.g., burst period 0) of the Frequency Correction Channel (FCCH) including a pre-defined sequence (e.g., an all-zero sequence) that produces a fixed tone in the Gaussian minimum-shift keying (GMSK) modulator output. This tone enables the access terminal 104 to lock its local oscillator to the clock of the base station 102 for frequency synchronization. The Frequency Correction Channel (FCCH) is typically transmitted in a frame immediately before the Synchronization Channel (SCH), as shown in FIGS. 3 and 4. The Synchronization Channel (SCH) enables the access terminal 104 to quickly identify a nearby cell and synchronize to that cell's timing structures (e.g., TDMA structures). The neighboring cell typically transmits a radio burst during the first burst period (e.g., burst period 0) of the Synchronization Channel (SCH) including the current frame clock of the particular base station 102 associated with the cell, an identity code (e.g., base station identity code (BSIC)) associated with the base station 102, and an extended training sequence.

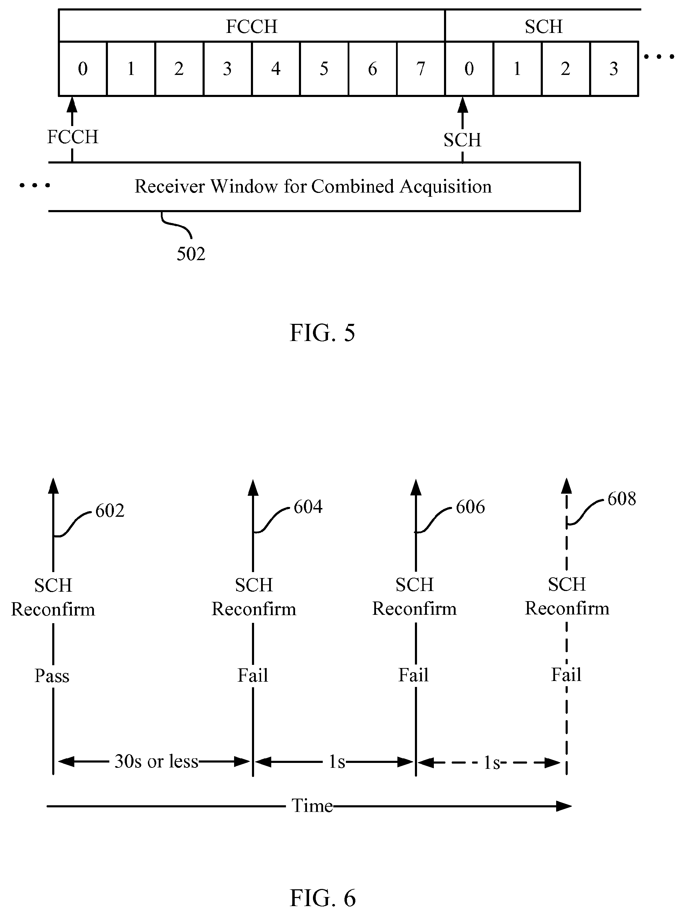

As part of the process for monitoring the one or more neighboring cells, the access terminal 104 typically ensures that it is synchronized with each neighboring cell by an acquisition procedure commonly referred to by those of skill in the art as a "combined acquisition procedure." During a combined acquisition procedure, the access terminal 104 initially detects the Frequency Correction Channel (FCCH) for frequency synchronization, followed by the Synchronization Channel (SCH) for time synchronization. Turning to FIG. 5, a magnified signaling format of a 51-frame multiframe structure is shown (such as those shown of FIGS. 3 and 4), depicting only a Frequency Correction Channel (FCCH) frame and a portion of the Synchronization Channel (SCH) frame. When performing a typical combined acquisition procedure, the access terminal 104 opens a receive window 502 in order to continuously monitor the control channel carrier for capturing the Frequency Correction Channel (FCCH) to get a lock on the frequency and the Synchronization Channel (SCH) to get time synchronization and decode the BSIC ID. After the Synchronization Channel (SCH) has been successfully decoded, and the frequency and timing are synchronized, the receive window 502 is closed. As used herein, a receive window, such as the receive window 502, includes a period of time when the access terminal 104 powers ON one or more components of a receiver circuit for monitoring the receiver circuit for received data and/or signaling.

As depicted in FIG. 5, the receive window 502 may be open for some period prior to the Frequency Correction Channel (FCCH). For instance, the access terminal 104 may open the receive window 502 some period prior to the Frequency Correction Channel (FCCH) to monitor for the Frequency Correction Channel (FCCH). In some instances with the access terminal 104 in idle mode, the receive window 502 can remain open for as many as almost 13 frames in order to complete the frequency and timing synchronizations associated with the combined acquisition procedure. For example, referring to the last FCCH frame in FIG. 3, if the receive window 502 is opened during the FCCH frame, but after the radio burst has already been transmitted during the first burst period (e.g., burst period 0), the receive window 502 will be open for the remaining portion of the FCCH frame, the SCH frame, 8 CCCH frames, the IDLE frame, the next FCCH frame and the next SCH frame, for a total of just under 13 full frames (about 60 milliseconds). For dedicated and transfer modes, the receive window 502 will be open multiple times for shorter durations to acquire neighboring cells because the neighboring cell acquisition typically occurs during the fixed idle periods similar to the idle periods shown in FIGS. 3 and 4.

After the access terminal 104 has successfully completed a combined acquisition procedure and has acquired a neighboring cell, the access terminal 104 may be adapted to periodically reconfirm the synchronization. For example, after successfully acquiring the neighboring cell, the access terminal 104 may be adapted to reconfirm the Synchronization Channel (SCH) for the neighboring cell at least every 30 seconds. That is, the access terminal 104 will obtain and decode the transmission on the Synchronization Channel (SCH) from the particular cell at the time it is expected to be transmitted every 30 seconds or less. As depicted in the diagram illustrated in FIG. 6, each time the reconfirmation is successful 602 (e.g., the Synchronization Channel (SCH) passes a successful decode), the access terminal 104 can wait another 30 seconds or less to reconfirm. If a reconfirmation fails 604 (e.g., the access terminal 104 fails to obtain and decode the Synchronization Channel (SCH) at the expected time), the access terminal 104 may be adapted to perform one or more subsequent reconfirmations (e.g., reconfirmation 606 and optional reconfirmation 608) within a shortened period of time (e.g., 1 second).

In some instances, after a predetermined number of consecutive failures (e.g., two or more), the access terminal 104 may re-acquire the neighboring cell by performing a conventional combined acquisition procedure, as described above. Typically, the consecutive failures indicate to a conventional access terminal that the timing is now wrong and needs to be completely re-determined. Accordingly, the conventional access terminal will initiate a combined acquisition procedure without any regard for the previous timing, since the previous timing has been determined to be inaccurate. As described above, the reacquisition procedure includes opening a receive window to monitor for the Frequency Correction Channel (FCCH), followed by the Synchronization Channel (SCH). However, as noted above, the combined acquisition procedure typically includes keeping the receive window open for as much as almost 13 frames (e.g., almost 60 milliseconds).

According to at least one aspect of the present disclosure, access terminals are provided, which are adapted to employ information obtained from a previously successful combined acquisition procedure when re-acquiring a cell. That is, when a combined acquisition is initialized after one or more reconfirmation failures, instead of disregarding the previous timing information and blindly looking for the Frequency Correction Channel (FCCH) by opening a potentially long continuous receive window, the previous Synchronization Channel (SCH) timing is used to open a receive window around a time when the Frequency Correction Channel (FCCH) and the Synchronization Channel (SCH) are expected. In other words, since the previous Synchronization Channel (SCH) timing may represent a sufficiently accurate timing estimate that may be reliable up to a certain amount of error, given that the previous Synchronization Channel (SCH) timing has previously been able to decode the Synchronization Channel (SCH), this Synchronization Channel (SCH) timing can be employed to open a receive window at a time when the Frequency Correction Channel (FCCH) and Synchronization Channel (SCH) are expected.

In at least some instances, such features may enable the device to avoid employing multiple idle periods during dedicated voice mode or data transfer mode looking for the Frequency Correction Channel (FCCH), which can be utilized for reconfirming or acquiring other neighboring cells. Additionally, since a combined acquisition procedure can be power intensive due to continuous reception over multiple slots until the next Frequency Correction Channel (FCCH) occurs, such features may also conserve substantial power in idle mode by reducing the period of time spent looking for the Frequency Correction Channel (FCCH).

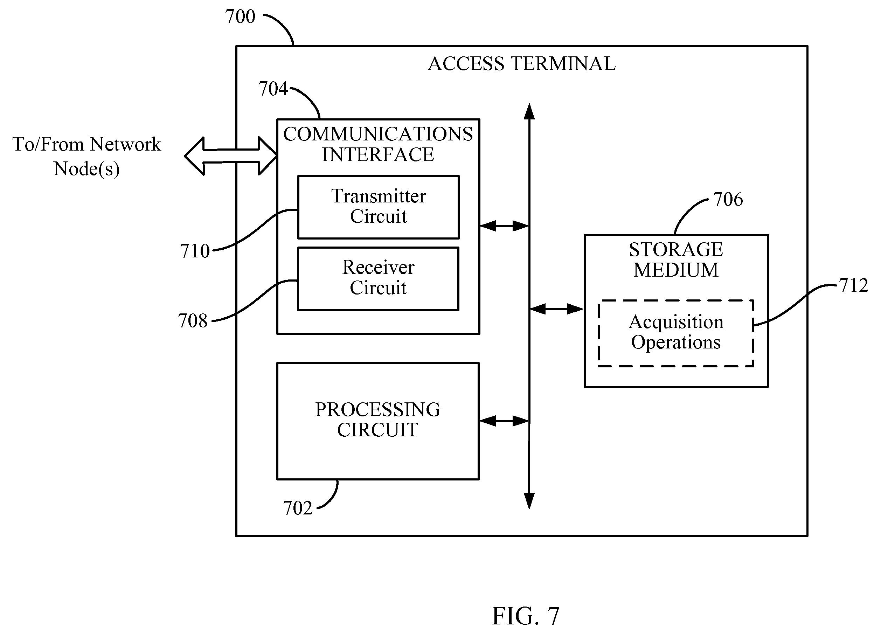

FIG. 7 is a block diagram illustrating select components of such an access terminal 700 according to at least one example of the present disclosure. As shown, the access terminal 700 may include a processing circuit 702 coupled to or placed in electrical communication with a communications interface 704 and a storage medium 706.

The processing circuit 702 is arranged to obtain, process and/or send data, control data access and storage, issue commands, and control other desired operations. The processing circuit 702 may include circuitry adapted to implement desired programming provided by appropriate media in at least one example. For example, the processing circuit 702 may be implemented as one or more processors, one or more controllers, and/or other structure configured to execute executable programming. Examples of the processing circuit 702 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 702 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 702 are for illustration and other suitable configurations within the scope of the present disclosure are also contemplated.

The processing circuit 702 is adapted for processing, including the execution of programming, which may be stored on the storage medium 706. As used herein, the term "programming" shall be construed broadly to include without limitation instructions, instruction sets, data, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The communications interface 704 is configured to facilitate wireless communications of the access terminal 700. For example, the communications interface 704 may include circuitry and/or programming adapted to facilitate the communication of information bi-directionally with respect to one or more network nodes. The communications interface 704 may be coupled to one or more antennas (not shown), and includes wireless transceiver circuitry, including at least one receiver circuit 708 (e.g., one or more receiver chains) and/or at least one transmitter circuit 710 (e.g., one or more transmitter chains).

The storage medium 706 may represent one or more computer-readable, machine-readable, and/or processor-readable devices for storing programming, such as processor executable code or instructions (e.g., software, firmware), electronic data, databases, or other digital information. The storage medium 706 may also be used for storing data that is manipulated by the processing circuit 702 when executing programming. The storage medium 706 may be any available media that can be accessed by a general purpose or special purpose processor, including portable or fixed storage devices, optical storage devices, and various other mediums capable of storing, containing and/or carrying programming. By way of example and not limitation, the storage medium 706 may include a computer-readable, machine-readable, and/or processor-readable storage medium such as a magnetic storage device (e.g., hard disk, floppy disk, magnetic strip), an optical storage medium (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and/or other mediums for storing programming, as well as any combination thereof.

The storage medium 706 may be coupled to the processing circuit 702 such that the processing circuit 702 can read information from, and write information to, the storage medium 706. That is, the storage medium 706 can be coupled to the processing circuit 702 so that the storage medium 706 is at least accessible by the processing circuit 702, including examples where the storage medium 706 is integral to the processing circuit 702 and/or examples where the storage medium 706 is separate from the processing circuit 702 (e.g., resident in the access terminal 700, external to the access terminal 700, and/or distributed across multiple entities).

Programming stored by the storage medium 706, when executed by the processing circuit 702, causes the processing circuit 702 to perform one or more of the various functions and/or process steps described herein. For example, the storage medium 706 may include acquisition operations 714. The acquisition operations 714 can be implemented by the processing circuit 702 to perform acquisition of a cell, confirmation of a cell, and/or re-acquisition of a cell. Thus, according to one or more aspects of the present disclosure, the processing circuit 702 is adapted to perform (in conjunction with the storage medium 706) any or all of the processes, functions, steps and/or routines for any or all of the access terminals 104 described herein As used herein, the term "adapted" in relation to the processing circuit 702 may refer to the processing circuit 702 being one or more of configured, employed, implemented, and/or programmed to perform a particular process, function, step and/or routine according to various features described herein.

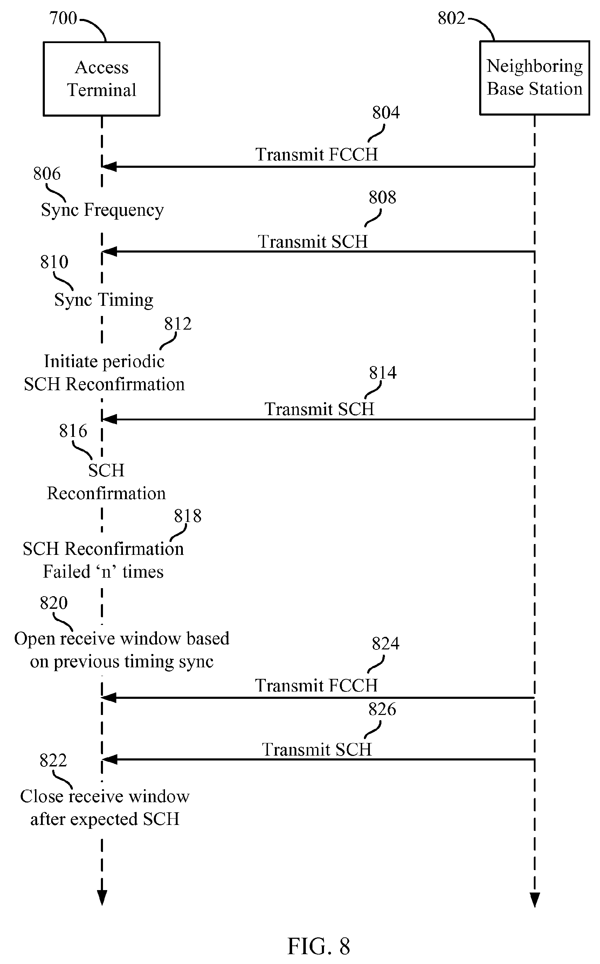

In operation, the access terminal 700 can employ information obtained from a previous cell acquisition in performing a subsequent re-acquisition of the same cell. FIG. 8 is a flow diagram illustrating an example for facilitating cell acquisition and re-acquisition according to at least one implementation. In the example illustrated, the access terminal 700 and a network node identified as a neighboring base station 802 are shown.

Initially, the access terminal 700 can acquire the neighboring base station 802. In this example, the access terminal 700 can perform a combined acquisition procedure in which the access terminal 700 employs the control channel carrier for the neighboring base station 802 to initially detect the Frequency Correction Channel (FCCH) for frequency synchronization, followed by the Synchronization Channel (SCH) for time synchronization. When acquiring the neighboring base station 802 by a combined acquisition procedure, the access terminal 700 may open a receive window for a period of time until the access terminal detects the Frequency Correction Channel (FCCH) and the Synchronization Channel (SCH).

The combined acquisition procedure may include the neighboring base station 802 broadcasting a Frequency Correction Channel (FCCH) transmission 804 including a burst with a pre-defined sequence (e.g., an all-zero sequence) that produces a fixed tone (e.g., a tone at 67.7Khz) in the Gaussian minimum-shift keying (GMSK) modulator output. This tone enables the access terminal 700 to lock its local oscillator to the clock of the base station 802 for frequency synchronization at 806.

The neighboring base station 802 further broadcasts a Synchronization Channel (SCH) transmission 808. As noted above, the Synchronization Channel (SCH) follows immediately after the frame in which the Frequency Correction Channel (FCCH) is transmitted. The Synchronization Channel (SCH) transmission 808 may include the current frame clock of the neighboring base station 802, an identity code (e.g., base station identity code (BSIC)) associated with the neighboring base station 802, and an extended training sequence. The access terminal 700 can decode the Synchronization Channel (SCH) transmission 808 to synchronize the timing at 810.

After the access terminal 700 has successfully decoded the Synchronization Channel (SCH) transmission, the access terminal 700 can initiate periodic reconfirmation procedures 812. The periodic reconfirmation procedures 812 may include reconfirming the synchronization with the Synchronization Channel (SCH) by decoding a Synchronization Channel (SCH) transmission at a periodic interval. For example, the access terminal 700 may be adapted to reconfirm the synchronization with the Synchronization Channel (SCH) at least every 30 seconds. Accordingly, the neighboring base station 802 may broadcast a Synchronization Channel (SCH) transmission 814, and the access terminal 700 can reconfirm the synchronization at 816 by decoding the transmission at the time when the Synchronization Channel (SCH) transmission is expected. That is, at 816, the access terminal 700 opens a receive window to receive and decode the Synchronization Channel (SCH) transmission at the time when the access terminal 700 expects the transmission to be sent, according to the timing synchronization.

If the Synchronization Channel (SCH) transmission is successfully decoded, the access terminal 700 can know that the timing is still synchronized and the access terminal 700 will wait for the predefined period before conducting a subsequent reconfirmation. On the other hand, if the access terminal 700 fails to decode the Synchronization Channel (SCH) transmission, then the access terminal 700 may attempt a subsequent reconfirmation within a shortened period of time, similar to that described above with reference to FIG. 6. For example, following a failed attempt, the access terminal 700 may attempt a subsequent reconfirmation within a shorter duration than between successive successful SCH reconfirmations.

Following a predetermined number of consecutive failed attempts at 818, the access terminal 700 is adapted to re-acquire the neighboring base station 802. By way of example and not limitation, the access terminal 700 may perform a re-acquisition after 2 or more consecutive failed reconfirmations.

According to an aspect of the present disclosure, the access terminal 700 can be adapted to reduce the size of the open receive window (e.g., reduce the time during which one or more components of the receiver circuit 708 in FIG. 7 are power ON) for the re-acquisition procedure by employing the previously obtained information about the Synchronization Channel (SCH). Instead of blindly opening a receive window to acquire a Frequency Correction Channel (FCCH) and the Synchronization Channel (SCH), as would be done for a conventional combined acquisition procedure, the access terminal 700 can open a receive window for a predefined period of time around the time when the Synchronization Channel (SCH) was expected, based on the timing synchronization obtained by the previously performed combined acquisition procedure. In other words, the access terminal 700 has already obtained information for when the Synchronization Channel (SCH) transmission is expected from the neighboring base station 802 based on the timing synchronization at step 810 described above. However, the consecutive failures to reconfirm the Synchronization Channel (SCH) indicate that there is a possibility that the access terminal's 700 timing synchronization has skewed.

The access terminal 700 may be adapted to open the receive window 820 at a predefined period of time around the time when the Frequency Correction Channel (FCCH) and the Synchronization Channel (SCH) are expected, and may close the receive window 822 a predefined period of time after the time when the Synchronization Channel (SCH) is expected. For example, the access terminal 700 may open a receive window 820 at least two frames prior to the frame during which the Synchronization Channel (SCH) transmission is expected, and may close the receive window 822 one or more frames after the frame during which the Synchronization Channel (SCH) transmission is expected. In at least one implementation, the access terminal 700 is adapted to open the receive window 820 two frames prior to the frame during which the Synchronization Channel (SCH) transmission is expected in order to capture the Frequency Correction Channel (FCCH) (since the Frequency Correction Channel (FCCH) is 1 frame before the Synchronization Channel (SCH)), and the access terminal 700 is adapted to close the receive window 822 one frame after the frame during which the Synchronization Channel (SCH) transmission is expected if the Frequency Correction Channel (FCCH) is not detected during that period. In this example, the receive window is open for about 4 total frames as opposed to the 13 frames that the receive window can potentially be open for a conventional combined acquisition procedure.

During the period when the receive window is opened (e.g., between 820 and 822), the neighboring base station 802 may or may not transmit the Frequency Correction Channel (FCCH) 824 and the Synchronization Channel (SCH) 826. When there is a Frequency Correction Channel (FCCH) transmission 824 during the receive window that is successfully captured and decoded, the access terminal 700 can update its timing synchronization further capture and decode the subsequent Synchronization Channel (SCH). When the access terminal 700 is unable to capture a Frequency Correction Channel (FCCH) transmission while the reduced receive window is opened (e.g., 820 through 822), the access terminal 700 may be adapted to subsequently attempt a subsequent combined acquisition procedure to re-acquire the neighboring base station 802.

In some implementations, when a previous re-acquisition attempt fails, the access terminal 700 may be adapted to perform a plurality of consecutive re-acquisition attempts reusing the Synchronization Channel (SCH) timing information to employ a reduced receive window prior to employing a conventional combined acquisition procedure. In other words, following a previously failed re-acquisition attempt using a reduced receive window for the combined acquisition procedure based on the previously acquired Synchronization Channel (SCH) timing information, the access terminal 700 may conduct a subsequent re-acquisition attempt employing another reduced receive window for the combined acquisition procedure that is also based on the previously acquired Synchronization Channel (SCH) timing information. In some instances, the access terminal 700 may, for a subsequent re-acquisition attempt, employ a receive window that is incrementally larger than the receive window employed for a previously unsuccessful re-acquisition attempt. After a predetermined number of re-acquisition attempts consecutively fail using a reduced receive window based on the previously acquired Synchronization Channel (SCH) timing information, the access terminal 700 may employ a conventional receive window for a combined acquisition procedure to re-acquire the neighboring base station 802.

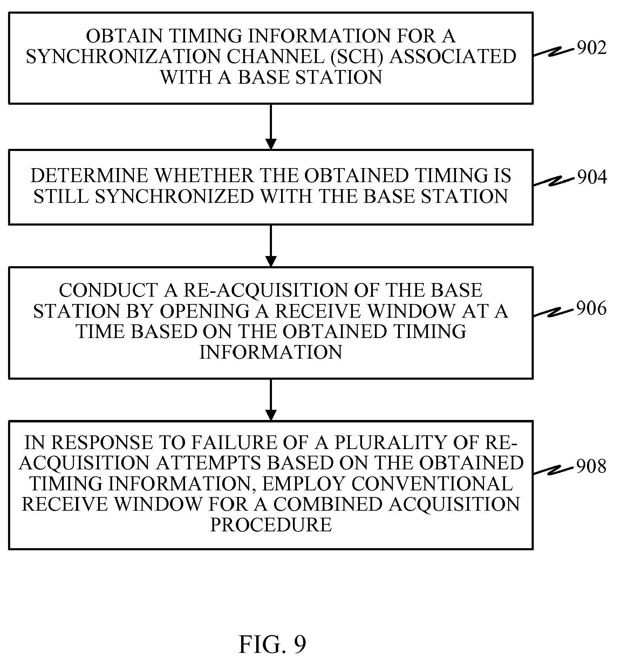

Additional features of the present disclosure include methods operational on an access terminal, such as the access terminal 700, for employing timing information for a Synchronization Channel (SCH) when conducting a subsequent re-acquisition of a base station. FIG. 9 is a flow diagram illustrating a method according to at least one example. Referring to FIGS. 7 and 9, an access terminal 700 may obtain timing information for a Synchronization Channel (SCH) associated with a base station at step 902. For example, the processing circuit 702 executing the acquisition operations 712 may conduct a combined acquisition procedure, as described herein, for frequency and timing synchronization. Generally speaking, the processing circuit 702 executing the acquisition operations 712 can open a receive window by powering on one or more components of the receiver circuit 708, and can monitor a control channel carrier for the base station via the receiver circuit 708 to capture a Frequency Correction Channel (FCCH) for frequency synchronization, and to detect and decode a subsequent Synchronization Channel (SCH) for time synchronization.

At step 904, the access terminal 700 determines whether the obtained timing is still synchronized with the base station. For example, the processing circuit 702 executing the acquisition operations 712 can periodically reconfirm synchronization with the Synchronization Channel (SCH). In some instances, the processing circuit 702 executing the acquisition operations 712 can employ the receiver circuit 708 of the communications interface 704 to periodically reconfirm the synchronization with the Synchronization Channel (SCH) by decoding a Synchronization Channel (SCH) transmission at a periodic interval. The periodic interval may be at least every 30 seconds in at least one example. The reconfirmation may include the processing circuit 702 opening a receive window (e.g., powering ON one or more components of the receiver circuit 708) to receive and decode the Synchronization Channel (SCH) transmission at the time when the processing circuit 702 expects the transmission to be sent. The time when the Synchronization Channel (SCH) transmission is expected to be sent is based on the timing synchronization obtained at step 902.

If the processing circuit 702 successfully captures and decodes the Synchronization Channel (SCH) transmission, the processing circuit 702 can determine that the timing is still synchronized. When the timing is determined to be synchronized, the processing circuit 702 executing the acquisition operations 712 can wait for the duration of the predefined period before conducting a subsequent reconfirmation.

On the other hand, if the processing circuit 702 fails to capture and decode the Synchronization Channel (SCH) transmission, then the processing circuit 702 executing the acquisition operations 712 can attempt a subsequent reconfirmation within a shortened period of time, similar to that described above with reference to FIG. 6. For example, following a failed attempt, the processing circuit 702 executing the acquisition operations 712 may attempt a subsequent reconfirmation within a shorter duration than between successive successful SCH reconfirmations. Following a predetermined number of consecutively failed reconfirmations, the processing circuit 702 executing the acquisition operations 712 may determine that the timing is no longer synchronized. In at least some examples, the processing circuit 702 executing the acquisition operations 712 may determine that the timing is no longer synchronized in response to a failure of two (2) or more consecutive reconfirmations.

In response to the determination that the access terminal 700 appears to no longer be synchronized with the base station, the access terminal 700 may conduct a re-acquisition of the base station at step 906. This re-acquisition of the base station can include a typical combined acquisition procedure, where the processing circuit 702 monitors the control channel carrier via the receiver circuit 708 for a Frequency Correction Channel (FCCH) and subsequent Synchronization Channel (SCH). The processing circuit 702 executing the acquisition operations 712, however, strategically opens a receive window (e.g., powers ON one or more components of the receiver circuit 708) based on the previously obtained timing information, instead of blindly opening the receive window. The particular time for opening the receive window may be some period of time around the time when the Synchronization Channel (SCH) transmission is expected, based on the previously obtained timing. This period of time should be sufficient to capture the Frequency Correction Channel (FCCH) that precedes the expected Synchronization Channel (SCH) by one frame. For example, the processing circuit 702 executing the acquisition operations 712 may open a receive window at least two frames prior to the frame during which the Synchronization Channel (SCH) transmission is expected to attempt to capture the preceding Frequency Correction Channel (FCCH).

In some instances, the processing circuit 702 may also close the receive window at a particular time that is also based on the previously obtained timing information. The particular time for closing the receive window may be some predetermined amount of time after the time when the processing circuit 702 expects to receive the Synchronization Channel (SCH) transmission. For example, the processing circuit 702 executing the acquisition operations 712 may close the receive window one or more frames after the frame during which the Synchronization Channel (SCH) transmission is expected, if the Frequency Correction Channel (FCCH) is not detected during that period.

In some implementations, when a previous re-acquisition attempt fails, the processing circuit 702 executing the acquisition operations 712 may perform one or more consecutive re-acquisition attempts reusing the Synchronization Channel (SCH) timing information to reduce the period of the receive window. In other words, following a previously failed re-acquisition attempt using a receive window for the combined acquisition procedure based on the previously acquired Synchronization Channel (SCH) timing information, the processing circuit 702 executing the acquisition operations 712 may conduct a subsequent re-acquisition attempt employing another receive window for the combined acquisition procedure that is also based on the previously acquired Synchronization Channel (SCH) timing information. In some instances, the processing circuit 702 executing the acquisition operations 712 may, for a subsequent re-acquisition attempt, employ a receive window that is incrementally larger than the receive window employed for a previously unsuccessful re-acquisition attempt. For example, an initial re-acquisition attempt may open a receive window about two (2) frames before a time when the Synchronization Channel (SCH) is expected. If the initial re-acquisition attempt fails, the processing circuit 702 executing the acquisition operations 712 may perform a subsequent re-acquisition attempt by opening a receive window about three (3) or more frames before the time when the Synchronization Channel (SCH) is expected.

After a predetermined number of re-acquisition attempts have failed using a reduced receive window based on the previously acquired Synchronization Channel (SCH) timing information, the access terminal 700 may employ a conventional receive window for a combined acquisition procedure to re-acquire the base station at step 908. For example, the processing circuit 702 executing the acquisition operations 712 may determine that a predefined number of consecutive attempts to re-acquire the base station have failed when the receive window is opened based on the obtained timing information. For instance, each time the processing circuit 702 attempts to re-acquire the base station using the obtained timing information to determine when to open the receive window, the processing circuit 702 can keep a count. When that count reaches a predetermined number, the processing circuit 702 executing the acquisition operations 712 can determine that the re-acquisition approach using the obtained timing information has failed. In response to this determination, the processing circuit 702 executing the acquisition operations 712 can conduct a combined acquisition procedure by searching for a Frequency Correction Channel (FCCH) without employing the obtained timing information (e.g., by opening a receive window according to conventional procedures as described above).

By employing of the aspects and features described herein, access terminals can significantly reduce power consumption by employing previously obtained timing information for a Synchronization Channel (SCH) for re-acquiring a base station, even after such timing information has been determined to possibly be inaccurate.

While the above discussed aspects, arrangements, and embodiments are discussed with specific details and particularity, one or more of the components, steps, features and/or functions illustrated in FIGS. 1, 2, 3, 4, 5, 6, 7, 8 and/or 9 may be rearranged and/or combined into a single component, step, feature or function or embodied in several components, steps, or functions. Additional elements, components, steps, and/or functions may also be added or not utilized without departing from the invention. The apparatus, devices and/or components illustrated in FIGS. 1, 2 and/or 7 may be configured to perform or employ one or more of the methods, features, parameters, or steps described in FIGS. 3, 4, 5, 6, 8 and/or 9. The novel algorithms described herein may also be efficiently implemented in software and/or embedded in hardware.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function. The various methods described herein may be partially or fully implemented by programming (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the embodiments disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

The various features associate with the examples described herein and shown in the accompanying drawings can be implemented in different examples and implementations without departing from the scope of the present disclosure. Therefore, although certain specific constructions and arrangements have been described and shown in the accompanying drawings, such embodiments are merely illustrative and not restrictive of the scope of the disclosure, since various other additions and modifications to, and deletions from, the described embodiments will be apparent to one of ordinary skill in the art.

## Claims

1. A method operational on an access terminal (104), comprising:
obtaining timing information for a Synchronization Channel (SCH) associated with a base station (102);
determining whether the obtained timing is not currently synchronized with the base station (102); and
in response to a determination that the obtained timing is not currently synchronized with the base station (102), opening a receive window (502) for re-acquiring the base station (102), wherein the receive window (502) is opened at a time based on the obtained timing information.

2. The method of claim 1, wherein obtaining the timing information for the Synchronization Channel (SCH) associated with the base station (102) includes performing a combined acquisition procedure comprising:
capturing a Frequency Correction Channel (FCCH); and
decoding a Synchronization Channel (SCH) following the Frequency Correction Channel (FCCH).

3. The method of claim 1, wherein determining whether the obtained timing is not currently synchronized with the base station (102) comprises:
periodically reconfirming the obtained Synchronization Channel (SCH) timing information.

4. The method of claim 1, wherein opening the receive window (502) at a time based on the obtained timing information comprises:
opening the receive window (502) a predefined amount of time prior to a time when a Synchronization Channel (SCH) transmission is expected.

5. The method of claim 4, wherein the predefined amount of time includes an amount of time sufficient to capture a Frequency Correction Channel (FCCH) preceding the expected Synchronization Channel (SCH) transmission.

6. The method of claim 1, further comprising: closing the receive window (502) at a time based on the obtained timing information.

7. The method of claim 1, further comprising:
determining that the access terminal (104) is unable to re-acquire the base station (102) with a receive window (502) based on the obtained timing information; and
conducting an acquisition procedure by searching for a Frequency Correction Channel (FCCH) without employing the obtained timing information.

8. An access terminal (104), comprising:
means for obtaining timing information for a Synchronization Channel (SCH) associated with a base station (102);
means for periodically reconfirming the obtained Synchronization Channel (SCH) timing information; and
means for opening a receive window (502) for re-acquiring the base station (102) in response to a failure of two or more consecutive periodic reconfirmations, wherein the receive window (502) is opened at a time based on the obtained timing information.

9. The access terminal (104) of claim 8, wherein opening the receive window (502) at a time based on the obtained timing information comprises:
opening the receive window (502) a predefined amount of time prior to a time when a Synchronization Channel (SCH) transmission is expected, wherein the predefined amount of time includes an amount of time sufficient to capture a Frequency Correction Channel (FCCH) preceding the expected Synchronization Channel (SCH) transmission.

10. The access terminal (104) of claim 8, further comprising: means for closing the receive window (502) at a time based on the obtained timing information.

11. The access terminal (104) of claim 8, further comprising:
means for determining that the access terminal (104) is unable to re-acquire the base station (102) with a receive window (502) based on the obtained timing information; and
means for conducting an acquisition procedure by searching for a Frequency Correction Channel (FCCH) without employing the obtained timing information.

12. A computer-readable medium comprising instructions to cause a data-processing apparatus to carry out the steps of:
obtaining timing information for a Synchronization Channel (SCH) associated with a base station (102);
determining that the obtained Synchronization Channel (SCH) timing information is not currently synchronized with the base station (102); and
employing the obtained timing information to determine when to open a receive window (502) for re-acquiring the base station (102) in response to the determination that the obtained Synchronization Channel (SCH) timing information is not currently synchronized with the base station (102).

13. The computer-readable medium of claim 12, wherein determining that the obtained Synchronization Channel (SCH) timing information is not currently synchronized with the base station (102) comprises:
periodically reconfirming the obtained Synchronization Channel (SCH) timing information to determine whether the obtained timing information is currently synchronized with the base station (102).

14. The computer-readable medium of claim 13, wherein employing the obtained timing information to determine when to open a receive window (502) for re-acquiring the base station (102) comprises:
employing the obtained timing information for determining when to open the receive window (502) for re-acquiring the base station (102) in response to a failure of a predetermined number of consecutive reconfirmations of the obtained Synchronization Channel (SCH) timing information.

15. The computer-readable medium of claim 12, wherein employing the obtained timing information to determine when to open a receive window (502) for re-acquiring the base station (102) comprises:
employing the obtained timing information to close the receive window (502) a predefined amount of time after the time when the Synchronization Channel (SCH) transmission is expected based on the obtained timing information.

## Patentansprüche

1. Ein Verfahren, das auf einem Zugriffsendgerät (104) betreibbar ist, das Folgendes aufweist:
Erlangen von Timing-Information für einen Synchronisierungskanal bzw. SCH (SCH = Synchronization Channel), der mit einer Basisstation (102) assoziiert ist;
Bestimmen, ob das erlangte Timing aktuell nicht mit der Basisstation (102) synchronisiert ist; und
ansprechend auf eine Bestimmung, dass das erlangte Timing aktuell nicht mit der Basisstation (102) synchronisiert ist, Öffnen eines Empfangsfensters (502) zum Reakquirieren bzw. Neuerfassen der Basisstation (102), wobei das Empfangsfenster (502) zu einer Zeit basierend auf der erlangten Timing-Information geöffnet wird.

2. Verfahren nach Anspruch 1, wobei das Erlangen der Timing-Information für den Synchronisierungskanal (SCH), der mit der Basisstation (102) assoziiert ist, Durchführen einer kombinierten Erfassungsprozedur beinhaltet, die Folgendes aufweist:
Erfassen eines Frequenzkorrekturkanals bzw. FCCH (FCCH = Frequency Correction Channel); und
Decodieren eines Synchronisierungskanals (SCH) nachfolgend auf den Frequenzkorrekturkanal (FCCH).

3. Verfahren nach Anspruch 1, wobei das Bestimmen, ob das erlangte Timing aktuell nicht mit der Basisstation (102) synchronisiert ist, Folgendes aufweist:
periodisches Rückbestätigen der erlangten Synchronisierungskanal- bzw. SCH-Timing-Information.

4. Verfahren nach Anspruch 1, wobei das Öffnen des Empfangsfensters (502) zu einer Zeit basierend auf der erlangten Timing-Information Folgendes aufweist:
Öffnen des Empfangsfensters (502) eine vordefinierte Zeitdauer vor einer Zeit, zu der eine Synchronisierungskanal- bzw. SCH-Sendung erwartet wird.

5. Verfahren nach Anspruch 4, wobei die vordefinierte Zeitdauer eine Dauer an Zeit beinhaltet, die ausreicht, um einen Frequenzkorrekturkanal (FCCH) zu erfassen, der der erwarteten Synchronisierungskanal- bzw. SCH-Sendung vorausgeht.

6. Verfahren nach Anspruch 1, das weiter Folgendes aufweist: Schließen des Empfangsfensters (502) zu einer Zeit basierend auf der erlangten Timing-Information.

7. Verfahren nach Anspruch 1, das weiter Folgendes aufweist:
Bestimmen, dass das Zugriffsendgerät (104) nicht in der Lage ist, die Basisstation (102) neu zu erfassen mit einem Empfangsfenster (502) basierend auf der erlangten Timing-Information; und
Durchführen einer Erfassungsprozedur durch Suchen nach einem Frequenzkorrekturkanal (FCCH) ohne Einsetzen der erlangten Timing-Information.

8. Ein Zugriffsendgerät (104), das Folgendes aufweist:
Mittel zum Erlangen von Timing-Information für einen Synchronisierungskanal bzw. SCH (SCH = Synchronization Channel), der mit einer Basisstation (102) assoziiert ist;
Mittel zum periodischen Rückbestätigen der erlangten Synchronisierungskanal- bzw. SCH-Timinginformation; und
Mittel zum Öffnen eines Empfangsfensters (502) zum Reakquirieren bzw. Neuerfassen der Basisstation (102) ansprechend auf ein Fehlschlagen von zwei oder mehr aufeinanderfolgenden, periodischen Rückbestätigungen, wobei das Empfangsfenster (502) zu einer Zeit basierend auf der erlangten Timing-Information geöffnet wird.

9. Zugriffsendgerät (104) nach Anspruch 8, wobei das Öffnen des Empfangsfensters (502) zu einer Zeit basierend auf der erlangten Timing-Information Folgendes aufweist:
Öffnen des Empfangsfensters (502) für eine vordefinierte Zeitdauer vor einer Zeit, zu der eine Synchronisierungskanal- bzw. SCH-Sendung erwartet wird, wobei die vordefinierte Zeitdauer eine Zeitdauer beinhaltet, die ausreicht um einen Frequenzkorrekturkanal bzw. FCCH (FCCH = Frequency Correction Channel) zu erfassen, der der erwarteten Synchronisierungskanal- bzw. SCH-Sendung vorausgeht.

10. Zugriffsendgerät (104) nach Anspruch 8, das weiter Folgendes aufweist:
Mittel zum Schließen des Empfangsfensters (502) zu einer Zeit basierend auf der erlangten Information.

11. Zugriffsendgerät (104) nach Anspruch 8, das weiter Folgendes aufweist:
Mittel zum Bestimmen, dass das Zugriffsendgerät (104) nicht in der Lage ist, die Basisstation (102) mit einem Empfangsfenster (502) basierend auf der erlangten Timing-Information neuzuerfassen; und
Mittel zum Durchführen einer Erfassungsprozedur durch Suchen nach einem Frequenzkorrekturkanal (FCCH) ohne Einsetzen der erlangten Timing-Information.

12. Ein computerlesbares Medium, das Instruktionen aufweist, um eine Datenverarbeitungsvorrichtung zu veranlassen, die folgenden Schritte auszuführen:
Erlangen von Timing-Information für einen Synchronisierungskanal (SCH), der mit einer Basisstation (102) assoziiert ist;
Bestimmen, dass die erlangte Synchronisierungskanal- bzw. SCH-Timing-Information aktuell nicht mit der Basisstation (102) synchronisiert ist; und
Einsetzen der erlangten Timing-Information zum Bestimmen, wann ein Empfangsfenster (502) zum Reakquirieren bzw. Neuerfassen der Basisstation (102) geöffnet werden soll ansprechend auf die Bestimmung, dass die erlangte Synchronisierungskanal- bzw. SCH-Timing-Information aktuell nicht mit der Basisstation (102) synchronisiert ist.

13. Computerlesbares Medium nach Anspruch 12, wobei das Bestimmen, dass die erlangte Synchronisierungskanal- bzw. SCH-Timing-Information aktuell nicht mit der Basisstation (102) synchronisiert ist, Folgendes aufweist:
periodisches Rückbestätigen der erlangten Synchronisierungskanal- bzw. SCH-Timing-Information um zu bestimmen, ob die erlangte Timing-Information aktuell mit der Basisstation (102) synchronisiert ist.

14. Computerlesbares Medium nach Anspruch 13, wobei das Einsetzen der erlangten Timing-Information zum Bestimmen, wann ein Empfangsfenster (502) zum Neuerfassen der Basisstation (102) geöffnet werden soll, Folgendes aufweist:
Einsetzen der erlangten Timing-Information zum Bestimmen, wann das Empfangsfenster (502) zum Neuerfassen der Basisstation (102) geöffnet werden soll ansprechend auf ein Fehlschlagen einer vorbestimmten Anzahl von aufeinanderfolgenden Rückbestätigungen der erlangten Synchronisierungskanal- bzw. SCH-Timing-Information.

15. Computerlesbares Medium nach Anspruch 12, wobei das Einsetzen der erlangten Timing-Information zum Bestimmen, wann das Empfangsfenster (502) zum Neuerfassen der Basisstation (102) geöffnet werden soll, Folgendes aufweist:
Einsetzen der erlangten Timing-Information zum Schließen des Empfangsfensters (502) eine vordefinierte Zeitdauer nach der Zeit, zu der die Synchronisierungskanal- bzw. SCH-Sendung basierend auf der erlangten Timing-Information erwartet wird.

## Revendications

1. Procédé opérationnel sur un terminal d'accès (104), comprenant :
l'obtention d'information de synchronisation pour un canal de synchronisation (SCH) associé à une station de base (102) ;
la détermination de si la synchronisation obtenue n'est pas actuellement synchronisée avec la station de base (102) ; et
en réponse à une détermination que la synchronisation obtenue n'est pas actuellement synchronisée avec la station de base (102), l'ouverture d'une fenêtre de réception (502) pour la ré-acquisition de la station de base (102), dans lequel la fenêtre de réception (502) est ouverte à un moment basé sur l'information de synchronisation obtenue.

2. Procédé selon la revendication 1, dans lequel l'obtention de l'information de synchronisation pour le canal de synchronisation (SCH) associé à la station de base (102) comprend l'exécution d'une procédure d'acquisition combinée comprenant :
la capture d'un canal de correction de fréquence (FCCH) ; et
le décodage d'un canal de synchronisation (SCH) à la suite du canal de correction de fréquence (FCCH).

3. Procédé selon la revendication 1, dans lequel la détermination que la synchronisation obtenue n'est pas actuellement synchronisée avec la station de base (102) comprend l'étape consistant à :
reconfirmer périodiquement l'information de synchronisation obtenue pour le canal de synchronisation (SCH).

4. Procédé selon la revendication 1, dans lequel l'ouverture de la fenêtre de réception (502) à un moment basé sur l'information de synchronisation obtenue comprend :
l'ouverture de la fenêtre de réception (502) à un intervalle de temps prédéfini avant un moment où l'on attend la transmission du canal de synchronisation (SCH).

5. Procédé selon la revendication 4, dans lequel l'intervalle de temps prédéfini comprend un intervalle de temps qui est suffisant pour capturer un canal de correction de fréquence (FCCH) précédant la transmission attendue du canal de synchronisation (SCH).

6. Procédé selon la revendication 1, comprenant en outre : la fermeture de la fenêtre de réception (502) à un moment basé sur l'information de synchronisation obtenue.

7. Procédé selon la revendication 1, comprenant en outre :
la détermination que le terminal d'accès (104) est dans l'impossibilité de réaliser la ré-acquisition de la station de base (102) avec une fenêtre de réception (502) qui est basée sur l'information de synchronisation obtenue; et
la conduite d'une procédure d'acquisition par la recherche d'un canal de correction de fréquence (FCCH) sans utiliser l'information de synchronisation obtenue.

8. Un terminal d'accès (104), comprenant :
des moyens pour obtenir de l'information de synchronisation pour un canal de synchronisation (SCH) associé à une station de base (102) ;
des moyens pour reconfirmer périodiquement l'information de synchronisation obtenue pour le canal de synchronisation (SCH) ; et
des moyens pour ouvrir une fenêtre de réception (502) pour la ré-acquisition de la station de base (102) en réponse à un échec de deux ou plusieurs reconfirmations périodiques consécutives, dans lequel la fenêtre de réception (502) est ouverte à un moment basé sur l'information de synchronisation obtenue.

9. Le terminal d'accès (104) de la revendication 8, dans lequel ll'ouverture de la fenêtre de réception (502) à un moment basé sur l'information de synchronisation obtenue comprend :
l'ouverture de la fenêtre de réception (502) à un intervalle de temps prédéfini avant un moment où l'on attend la transmission d'un canal de synchronisation (SCH), dans lequel l'intervalle de temps prédéfini comprend un intervalle de temps suffisant pour capturer un canal de correction de fréquence (FCCH) qui précède la transmission attendue d'un canal de synchronisation (SCH).

10. Le terminal d'accès (104) selon la revendication 8, comprenant en outre : des moyens pour fermer la fenêtre de réception (502) à un moment basé sur l'information de synchronisation obtenue.

11. Le terminal d'accès (104) selon la revendication 8, comprenant en outre :
un moyen pour déterminer que le terminal d'accès (104) est dans l'impossibilité de procéder à la ré-acquisition de la station de base (102) avec une fenêtre de réception (502) basée sur l'information de synchronisation obtenue ; et
des moyens pour conduire une procédure d'acquisition par la recherche d'un canal de correction de fréquence (FCCH) sans utiliser l'information de synchronisation obtenue.

12. Un support lisible par ordinateur, comprenant des instructions amenant un appareil de traitement de données de réaliser les étapes consistant à :
obtenir de l'information de synchronisation pour un canal de synchronisation (SCH) associé à une station de base (102) ;
déterminer que l'information de synchronisation obtenue pour le canal de synchronisation (SCH) n'est pas actuellement synchronisée avec la station de base (102) ; et
utiliser l'information de synchronisation obtenue afin de déterminer le moment d'ouverture d'une fenêtre de réception (502) destinée à acquérir de nouveau la station de base (102) en réponse à une détermination que l'information de synchronisation obtenue pour le canal de synchronisation (SCH) n'est pas actuellement synchronisée avec la station de base (102).

13. Le support lisible par ordinateur selon la revendication 12, dans lequel la détermination que l'information de synchronisation obtenue pour le canal de synchronisation (SCH) n'est pas actuellement synchronisée avec la station de base (102) comprend l'étape consistant à :
reconfirmer périodiquement l'information de synchronisation obtenue pour le canal de synchronisation (SCH) afin de déterminer si l'information de synchronisation obtenue est actuellement synchronisée avec la station de base (102).

14. Le support lisible par ordinateur selon la revendication 13, dans lequel l'utilisation de l'information de synchronisation obtenue afin de déterminer le moment d'ouverture d'une fenêtre de réception (502) pour acquérir de nouveau la station de base (102) comprend l'étape consistant à :
utiliser l'information de synchronisation obtenue pour déterminer le moment d'ouverture de la fenêtre de réception (502) pour la ré-acquisition de la station de base (102) en réponse à un échec d'un nombre prédéterminé de reconfirmations consécutives de l'information de synchronisation obtenue pour le canal de synchronisation (SCH).

15. Le support lisible par ordinateur de la revendication 12, dans lequel l'utilisation de l'information de synchronisation obtenue afin de déterminer le moment d'ouverture d'une fenêtre de réception (502) pour acquérir de nouveau la station de base (102) comprend l'étape consistant à :
utiliser l'information de synchronisation obtenue afin de fermer la fenêtre de réception (502) à un intervalle de temps prédéfini après le moment où l'on attend la transmission du canal de synchronisation (SCH) sur la base de l'information de synchronisation obtenue.
